# FASCICULE DE BREVET EUROPEEN

(11) **EP 0 593 337 B1**
(45) Date de publication et mention de la délivrance du brevet: **23.04.1997**
(21) Numéro de dépôt: 93402462.1
(22) Date de dépôt: 07.10.1993
(51) Int. Cl.: B29C 53/84

(54) **Dispositif de réalisation d'enroulements filamentaires à matrice thermoplastique**
Vorrichtung zum Herstellen von thermoplastischen Faserwicklungen
Apparatus for the fabrication of thermoplastic filament windings

(30) Priorité: 12.10.1992 FR 9212130
(43) Date de publication de la demande: 20.04.1994
(73) Titulaire: AEROSPATIALE Société Nationale Industrielle, 75781 Paris Cédex 16 (FR)
(72) Inventeur: Fages, Jacques, F-93170 Bagnolet (FR)
(74) Mandataire: Lhuillier, René

(56) Documents cités:
- EP-A- 0 491 355
- WO-A-89/03761
- DE-A- 2 421 619
- FR-A- 2 107 457

## Description

L'invention se rapporte à l'élaboration de pièces réalisées à l'aide d'enroulements filamentaires de matériaux composites à matrice thermoplastique et concerne plus précisément un dispositif de bobinage mettant en oeuvre des chalumeaux pour la fusion de la résine thermoplastique.

On sait réaliser de plusieurs manières des pièces bobinées en appliquant sur un mandrin un enroulement filamentaire de matériaux fibrés et on utilise pour cela une tête de distribution qui oriente les fibres ou filaments sur le mandrin tournant de telle sorte que ceux-ci s'enroulent selon une trajectoire précise et soient tendus sur le mandrin. Pour assurer une liaison intime des filaments et obtenir une pièce renforcée, il est connu de les associer à des filaments thermoplastiques et d'assurer la fusion de la résine de la mèche. On connaît un dispositif tel que décrit notamment dans le EP-A 0 423 954 qui consiste à former un corps creux par enroulement filamentaire à matrice thermoplastique mettant en oeuvre un rouleau au contact appliquant les filaments sur un mandrin, rouleau renfermant un dispositif de chauffage qui complète un préchauffage des filaments avant leur entrée dans le rouleau applicateur.

Cette technique se prête difficilement à la réalisation de pièces bobinées à cadences industrielles, aussi la Demanderesse a-t-elle mis au point un nouveau dispositif d'élaboration de pièces bobinées à matrice thermoplastique autorisant un bobinage plus rapide et améliorant la qualité de la pièce obtenue.

Un objet principal de la présente invention consiste donc en un dispositif de bobinage monté sur une machine à bobiner permettant la réalisation d'enroulements filamentaires à matrice thermoplastique sur un mandrin, à l'aide d'un galet distributeur et d'un système qui utilise au moins un moyen de chauffage de la résine de la mèche déposée, dispositif selon lequel le galet distributeur n'est pas en contact avec le mandrin et est monté sur une tête pivotante sur laquelle sont également fixés deux chalumeaux, l'un des chalumeaux étant orienté en direction du mandrin sur la trajectoire de la mèche, en amont dudit galet, l'autre chalumeau étant orienté en direction du point de contact de la mèche avec le mandrin, et dispositif selon lequel un pyromètre optique est orienté en direction du mandrin, sur la trajectoire de la mèche déposée et en aval de son point de dépose, pour contrôler en continu la température de ladite mèche, le déplacement dudit pyromètre étant asservi au déplacement du point d'application de la mèche sur le mandrin. Selon une caractéristique particulière de l'invention, les chalumeaux sont montés aux extrémités des branches d'un étrier porté par la tête pivotante. Il est entendu que l'on peut exécuter l'opération avec une ou plusieurs mèches en même temps. Dans la suite de la description le mot mèche sous-entend une ou plusieurs mèches.

Avantageusement, le chalumeau disposé en amont du galet distributeur est un chalumeau de préchauffage délivrant un flux permettant de régler la température entre 20°C et 250°C sur la sous couche, et le chalumeau orienté en direction du point de contact de la mèche avec le mandrin est un chalumeau de fusion délivrant un flux permettant de régler la température entre 150°C et 500°C sur la mèche déposée.

D'autres caractéristiques particulières et avantages de l'invention ressortiront de la description suivante d'un exemple de réalisation dans lequel il est fait référence aux dessins annexés qui représentent :
figure 1 une vue simplifiée en perspective d'une machine de mise en oeuvre du dispositif ;
figure 2 une vue schématique en coupe transversale du mandrin et des chalumeaux ;
figures 3 et 4 des vues schématiques, respectivement en élévation et en plan de la machine.

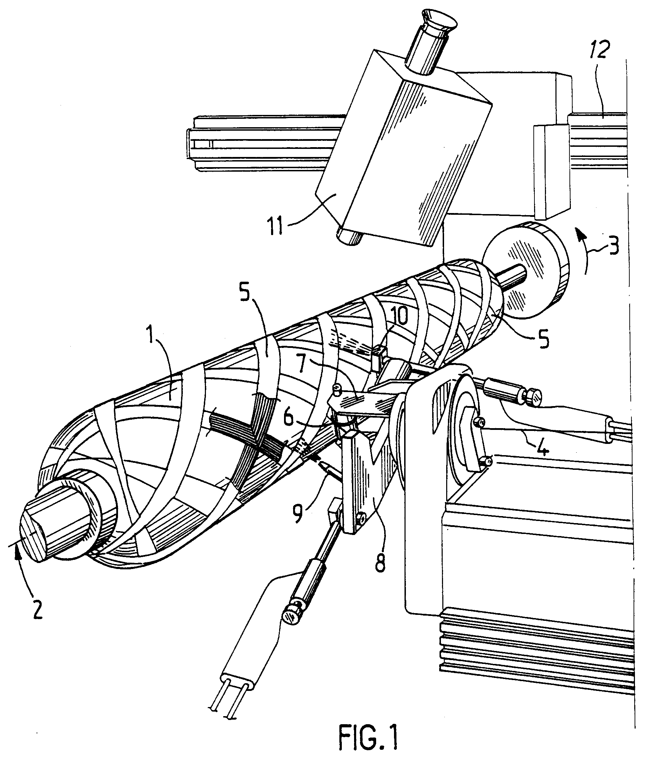

On a représenté sur les figures un mandrin support 1 de forme cylindrique qui tourne sur son axe 2 dans le sens de la flèche 3. La mèche de fibres 4, dont on voit à la figure 1 des rubans 5 déjà enroulés, est déposée par un galet distributeur 6 non en contact avec le mandrin. Le galet est monté sur une tête pivotante 7 mue par un moteur non représenté. On fait en sorte que le système d'alimentation des fibres assure en sortie du galet une forte tension des mèches. La tête pivotante porte aussi un étrier 8 à deux branches s'étendant de part et d'autre de la tête, lesdites branches supportant à leur extrémité, des chalumeaux 9 et 10 dont les buses sont orientées en direction du mandrin. Le chalumeau inférieur 9 c'est-à-dire celui qui est en amont du galet 6 par rapport au sens de rotation 3 du mandrin, est orienté sur la trajectoire de la mèche déposée. C'est un chalumeau de préchauffage délivrant un flux permettant de régler la température entre 20 et 250°C sur la sous couche qui présente l'avantage d'améliorer le composite et d'effectuer un bobinage plus rapide. On peut aussi préchauffer le mandrin entre 20° et 250°C si nécessaire. Le chalumeau supérieur 10 est orientable suivant l'axe 14 en direction du point de contact A entre la mèche 4 délivrée par le galet 6, et le mandrin 11 lui-même. Le chalumeau 10 est appelé chalumeau de fusion. Il assure la fusion de la résine de la mèche à une température d'environ 150 à 500°C. Grâce à la tête pivotante 7 on peut positionner les chalumeaux selon les directions voulues d'enroulement. On règle ainsi leur position angulaire. En outre les chalumeaux 9, 10 étant montés coulissants sur les branches de l'étrier 8 on peut régler aussi l'écartement de leur buse par rapport à la surface du mandrin.

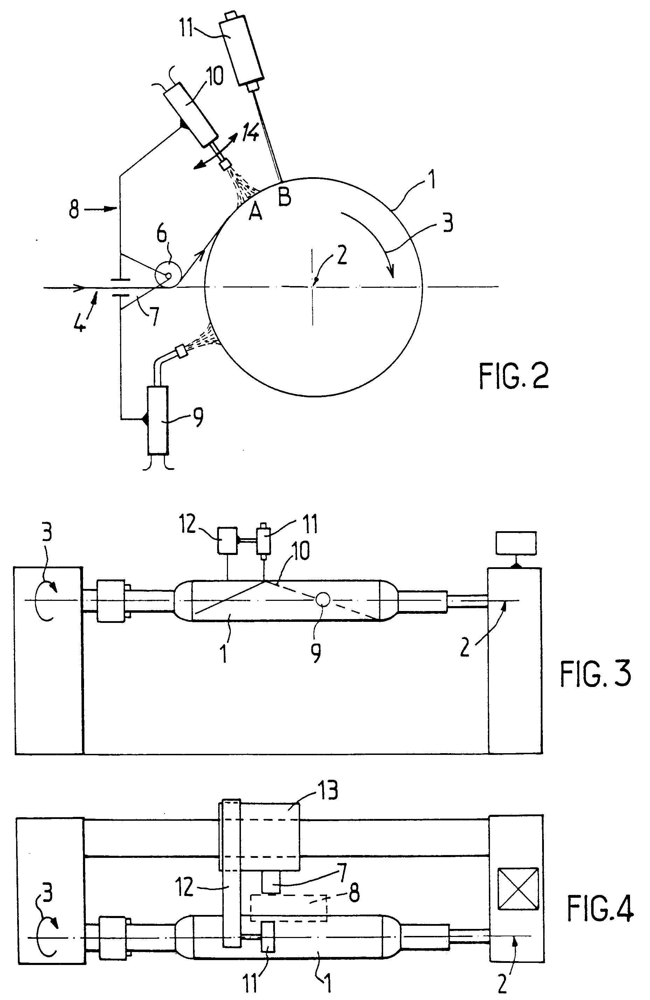

Un pyromètre optique 11 monté sur un support 12 est orienté en direction d'un point B du mandrin situé sur la trajectoire de la mèche en aval du point A par rapport au sens de rotation 3 du mandrin, et à peu de distance de lui, de façon à pouvoir contrôler à tout instant la température de la mèche 4 en cours de dépôt. Le support 12 du pyromètre 11 est fixé à un chariot mobile 13 sur lequel est montée la tête pivotante 7, comme le montre notamment la figure 4. Le déplacement du chariot 13 parallèlement au mandrin 1 permet donc le positionnement du galet distributeur de mèche et des chalumeaux sur toute la longueur du mandrin, mais il asservit également la position du pyromètre au déplacement du point d'application A de la mèche.

Le pyromètre joue un rôle essentiel car il permet de contrôler en continu et en permanence la température de fusion de la mèche au point B. Les informations fournies par le pyromètre sont exploitées et utilisées afin d'asservir la vitesse de bobinage de la mèche, mais aussi le flux de chaleur des chalumeaux, aux indications de température recueillies.

Pour agir sur la vitesse de bobinage, on modifie la vitesse du mandrin et celle du chariot portant la tête de distribution. Par ailleurs la modification des flux de chaleur des chalumeaux peut être obtenue par un régulateur de débit massique (air-liquide).

Grâce à ce dispositif et à cette machine, on peut réaliser des pièces bobinées à partir d'enroulements filamentaires à matrices thermoplastiques, par exemple des renforts de carbone à matrices thermoplastiques, et cela avec des cadences industrielles, tout en restant libre du choix de l'orientation des fibres.

## Revendications

1. Dispositif de bobinage monté sur une machine à bobiner permettant la réalisation d'enroulements filamentaires à matrice thermoplastique sur un mandrin à l'aide d'un galet distributeur qui n'est pas en contact avec le mandrin et d'un système qui utilise au moins un moyen de chauffage de la résine de la mèche déposée, caractérisé en ce que le galet distributeur (6) est monté sur une tête pivotante (7) sur laquelle sont également fixés deux chalumeaux (9, 10), l'un des chalumeaux (9) étant orienté en direction du mandrin sur la trajectoire de la mèche, en amont dudit galet, l'autre chalumeau (10) étant orienté en direction du point de contact A de la mèche avec le mandrin, et en ce que un pyromètre optique (11) est orienté en direction du mandrin, sur la trajectoire de la mèche déposée et en aval de son point de dépose, pour contrôler en continu la température de ladite mèche, le déplacement dudit pyromètre étant asservi au déplacement du point d'application de la mèche sur le mandrin.

2. Dispositif de bobinage selon la revendication 1, caractérisé en ce que les chalumeaux (9, 10) sont montés aux extrémités des branches d'un étrier (8) porté par la tête pivotante (7).

3. Dispositif de bobinage selon la revendication 1, caractérisé en ce que le chalumeau (9) disposé en amont du galet distributeur (6) est un chalumeau de préchauffage réglé à un flux donnant une température comprise entre 20°C et 250°C sur la sous couche.

4. Dispositif de bobinage selon la revendication 1, caractérisé en ce que le chalumeau (10) orienté en direction du point de contact de la mèche avec le mandrin est un chalumeau de fusion réglé à un flux donnant une température comprise entre 150°C et 500°C sur la mèche déposée.

5. Dispositif de bobinage selon la revendication 1, caractérisé en ce que un support (12) du pyromètre optique (11) est fixé à un chariot mobile (13) sur lequel est montée la tête pivotante (7).

## Claims

1. Winding device mounted on a winding machine enabling the production of filament windings having a thermoplastics matrix on a mandrel using a distributing roller which is not in contact with the mandrel and a system that uses at least one means of heating the resin of the deposited strand, characterised in that the distributing roller (6) is mounted on a pivoting head (7), to which there are also attached two blowtorches (9, 10), one of the blowtorches (9) being directed towards the mandrel on the trajectory of the strand, upstream of the roller, the other blowtorch (10) being directed towards the point of contact A of the strand with the mandrel, and a radiation pyrometer (11) is directed towards the mandrel, on the trajectory of the deposited strand and downstream of its point of deposit, in order to monitor continuously the temperature of the strand, the movement of the pyrometer being dependent on the movement of the point of application of the strand to the mandrel.

2. Winding device according to claim 1, characterised in that the blowtorches (9, 10) are mounted at the ends of the arms of a clamp (8) carried by the pivoting head (7).

3. Winding device according to claim 1, characterised in that the blowtorch (9) positioned upstream of the distributing roller (6) is a pre-heating blowtorch that is regulated to a flow yielding a temperature of from 20°C to 250°C on the underlayer.

4. Winding device according to claim 1, characterised in that the blowtorch (10) directed towards the point of contact of the strand with the mandrel is a fusion blowtorch that is regulated to a flow yielding a temperature of from 150°C to 500°C on the deposited strand.

5. Winding device according to claim 1, characterised in that a support (12) of the radiation pyrometer (11) is attached to a movable carriage (13) on which the pivoting head (7) is mounted.

## Patentansprüche

1. Auf einer Wickelmaschine angebrachte Wickelvorrichtung, welche die Herstellung von Faserwicklungen mit thermoplastischer Matrix auf einer Wickelhülse mit Hilfe einer Abgaberolle, die mit der Wickelhülse nicht in Kontakt steht, und eines Systems erlaubt, das wenigstens ein Mittel zum Erwärmen des Harzes des aufgebrachten Vorgespinstes verwendet, dadurch gekennzeichnet, daß die Abgaberolle (6) auf einem schwenkbaren Kopf (7) angebracht ist, auf dem außerdem zwei Brenner (9, 10) befestigt sind, wobei einer der Brenner (9) in Richtung der Wickelhülse auf der Trajektorie des Vorgespinstes vor der Rolle orientiert ist und der andere Brenner (10) in Richtung des Kontaktpunktes A des Vorgespinstes mit der Wickelhülse orientiert ist, und dadurch, daß ein optisches Pyrometer (11) in Richtung der Wickelhülse auf der Trajektorie des aufgebrachtes Vorgespinstes und hinter seinem Aufbringungspunkt orientiert ist, um die Temperatur des Vorgespinstes fortlaufend zu kontrollieren, wobei die Verschiebung des Pyrometers mit der Verschiebung des Anbringungspunktes des Vorgespinstes auf der Wickelhülse gekoppelt ist.

2. Wickelvorrichtung nach Anspruch 1, dadurch gekennzeichnet, daß die Brenner (9, 10) an den Enden von Schenkeln eines Bügels (8) angebracht sind, der von dem schwenkbaren Kopf (7) getragen ist.

3. Wickelvorrichtung nach Anspruch 1, dadurch gekennzeichnet, daß der Brenner (9), der vor der Abgaberolle (6) angeordnet ist, ein Brenner zur Vorerwärmung ist, der mit einem Fluß geregelt ist, der eine zwischen 20°C und 250°C liegende Temperatur auf der Unterlage ergibt.

4. Wickelvorrichtung nach Anspruch 1, dadurch gekennzeichnet, daß der Brenner (10), der in Richtung des Kontaktpunktes des Vorgespinstes mit der Wickelhülse orientiert ist, ein Verschmelzungsbrenner ist, der mit einem Fluß geregelt ist, der eine zwischen 150°C und 500°C liegende Temperatur auf dem aufgebrachten Vorgespinst ergibt.

5. Wickelvorrichtung nach Anspruch 1, dadurch gekennzeichnet, daß ein Träger (12) des optischen Pyrometers (11) auf einem beweglichen Schlitten (13) befestigt ist, auf dem der schwenkbare Kopf (7) angebracht ist.
